# EUROPEAN PATENT SPECIFICATION

(11) **EP 0 877 188 B1**
(45) Date of publication and mention of the grant of the patent: **05.09.2001**
(21) Application number: 98303372.1
(22) Date of filing: 30.04.1998
(51) Int. Cl.: F16L 11/24, F16L 11/112, F16L 11/08

(54) **Tubing**
Schlauch
Tube

(30) Priority: 08.05.1997 GB 9709442
(43) Date of publication of application: 11.11.1998
(73) Proprietor: Smiths Group plc, London, NW11 8DS (GB)
(72) Inventor: Gibson, Diane, Clydebank, G81 2UG (GB)
(74) Representative: Flint, Jonathan McNeill

(56) References cited:
- EP-A- 0 111 248
- DE-A- 2 345 455
- GB-A- 885 594
- US-A- 4 098 298

## Description

This invention relates to tubing of the kind having an inner surface, an outer surface and a helical reinforcing element between the inner and outer surfaces.

Helical reinforcing elements are incorporated in tubing to make them resistant to kinking and crushing, whilst still enabling them to be flexible. It is difficult, however, to produce tubing having a high flexibility and strength, with a low weight. Another problem with conventional helically-reinforced tubes is that repeated flexing can cause damage at their ends, where the tubing is connected with its end fittings. One application where helically-reinforced tubes are used and where it is important for the tubing to have strength and low weight is in hoses used to supply milk from a milking cluster to a milking machine. Such a hose is shown, for example, in EP571480A. Other reinforced tubes are described, for example, in EP153739A, DE2345455, EP473045, GB1533204, GB922116 and US2798508. EP-A-0111248 describes a tube formed by a wound profile having an integral reinforcement.

It is an object of the present invention to provide improved tubes and tubing.

According to one aspect of the present invention there is provided tubing of the above-specified kind, wherein the tubing includes a strip of material having a width greater than the pitch of the reinforcement element, and that the strip is wound on the reinforcement element to extend on the inside of one turn of the reinforcement element and on the outside of an adjacent turn forming a compressible pocket between the inner and outer surfaces between adjacent turns of the reinforcing element such that when the tubing is bent, the compressible pocket is compressed on the inside of the bend of the tubing.

The compressible pocket is preferably an air pocket. The reinforcement member preferably has a D-shape in section.

According to a second aspect of the present invention there is provided a tube including tubing according to the above one aspect of the invention and at least one end fitting at one end of the tubing, characterised in that the end fitting includes a first cylindrical portion extending forwardly of the end of the tubing, a second cylindrical portion encompassing and bonded to the outside of the forward end of the tubing, and a stress-relieving portion extending rearwardly from the second cylindrical portion and bonded to the outside of the tubing.

The stress-relieving portion preferably comprises a plurality of longitudinal members extending rearwardly from the rear end of the second cylindrical portion and may include a ring member at its rear end encompassing the tubing, the longitudinal members extending between the second cylindrical portion and the ring member. The end fitting is preferably moulded about the forward end of the tubing.

According to a third aspect of the invention there is provided a method of making tubing comprising the steps of winding a helical reinforcing element, winding a strip of flexible material having a width greater than the pitch of the reinforcing element on the reinforcing element so that one part of the strip extends on the outside of the element and another part extends on the inside of the element and joining adjacent turns of the strip to one another such as to leave an air pocket between inner and outer surfaces of the tubing between adjacent turns of the reinforcing element.

A tube including tubing and end fittings, for use in milking, and its method and machine for manufacture, will now be described, by way of example, with reference to the accompanying drawing, in which:
- Figure 1: is a side elevation view of the tube;
- Figure 2: is a transverse sectional elevation view of the tube along the line II-II of Figure 1;
- Figure 3: is an enlarged sectional side elevation view of a part of the tubing in the tube; and
- Figure 4: is a further enlargement of a part of the wall of the tubing.

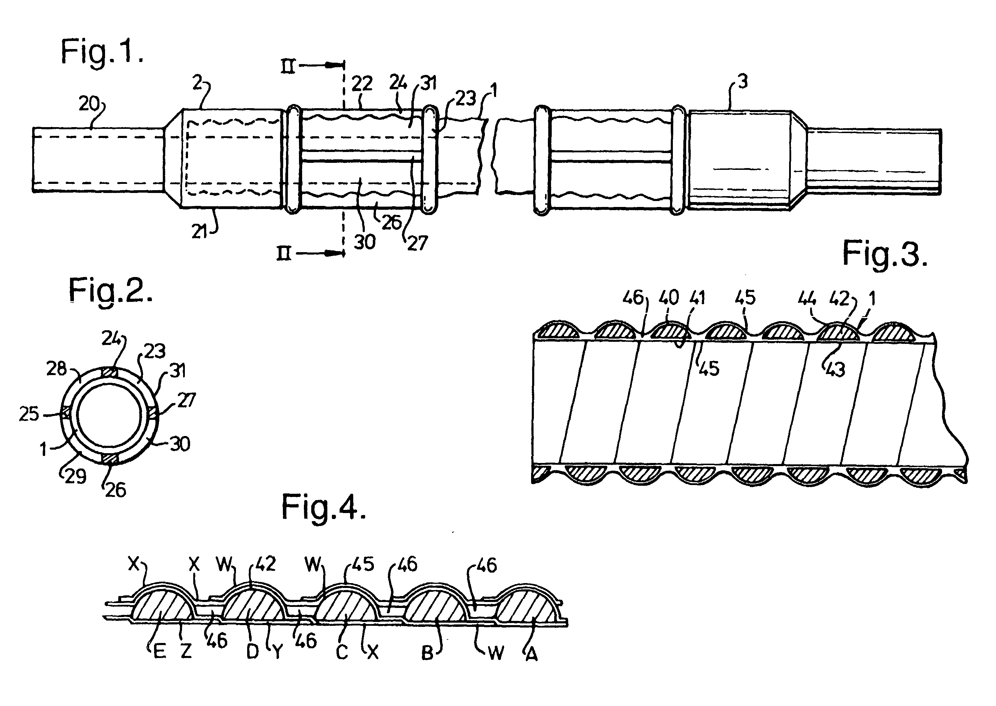

With reference first to Figures 1 and 2, the milking tube has a length of extemally-corrugated tubing 1 with an end fitting 2 and 3 at opposite ends by which the tube is connected to the milking cluster and to the milking machine respectively. The tubing 1 has an external diameter of about 22mm and may be of any length, depending on the application. The construction of the tubing 1 will be described in detail later.

The end fittings are identical, so only the construction of one fitting 2 will be described. The fitting 2 is made from a rubber-like material such as TPE (thermoplastic elastomer) or TPR (thermoplastic rubber). The fitting 2 has a first, forward portion 20 of cylindrical shape and circular section, being about 30mm long, with an internal diameter of 16mm and a wall thickness of about 2mm. The internal diameter of the first portion 20 is substantially the same as the internal diameter of the tubing 1 and the tubing does not extend within this first portion. The first portion 20 provides a resilient fit with a spigot (not shown) pushed into the end of the fitting 2. At the rear end of the first portion 20, the fitting 2 has a second cylindrical portion 21, with an increased diameter of about 24mm. The second portion 21 is about 27mm long and extends rearwardly along the outside of the tubing 1. The end fitting 2 is completed by a stress-relieving portion 22 extending rearwardly from the second cylindrical portion 21 by a distance of about 31mm. The stress-relieving portion 22 comprises a ring 23 encompassing the tubing 1 and spaced from the second portion 21 by four longitudinally-extending bars 24 to 27. The ring 23 is about 4mm wide and has a rounded external profile. The bars 24 to 27 are each about 4mm wide, are of substantially square profile externally and are equally spaced around the circumference of the tubing 1, so that the outside of the tubing is exposed in the stress-relieving portion 22 in gaps 28 to 31 between the bars.

The end fitting 2 is formed and joined with the tubing 1 by injection moulding the fitting about the forward end of the tubing. In this way, the inside surface of the second portion 21 and the stress-relieving portion 22 follow the external contours of the tubing 1 and are securely bonded to it. The moulding operation also fills any gap between the rear of first portion 20 and the forward end of the tubing 1, so that there is a smooth internal transition between the bore of the tubing and the passage through the forward end of the end fitting.

The stress-relieving portion 22 provides less restriction to flexing of the tubing 1 than does the second portion 21, because of the reduced amount of material in the stress-relieving portion. When the tube is flexed in the region of the end fitting 2, the extent of flexing will be greatest in the region of the tubing 1 to the rear of the end fitting, will be less in the stress-relieving portion 22, and will be least in the region of the tubing enclosed by the second portion 21 of the end fitting. In this way, flexing of the tubing I is gradually reduced towards its end, avoiding abrupt transitions that can cause damage. Also, the stress-relieving portion 22 of the end fitting 2 itself can flex more freely than the second portion 21, without being damaged. In addition to reducing stress damage to the tubing 1 and end fitting, the end fittings have the advantage that the bars 24 to 27 form a useful grip by which the tube can be held and twisted to fit it on or remove it from a mating coupling. The outer profile of the bars 24 to 27 could be rounded to facilitate gripping.

With reference now to Figures 3 and 4 the tubing 1 will be described in more detail. The tubing 1 is corrugated on its external surface 40 but is substantially smooth on its inner surface 41, so as to present a smooth path for milk or other fluid flowing along the tube. The tubing 1 is reinforced along its entire length by a helical reinforcing element 42. The reinforcing element 42 is made of a hard plastics, such as polypropylene, and has a D-shape section, with its flat surface 43 presented inwardly and its convex surface 44 presented outwardly. The reinforcing element 42 has a width of about 5mm, a height of about 2mm and is wound with a pitch of about 6mm, so that there is a gap about 1mm wide between adjacent turns.

The tubing 1 is completed by a single, thin strip 45 of a flexible rubber-like material such as TPE or TPR. The strip 45 is about 25mm wide, that is, wider than three pitches of the reinforcing element 42. The strip 45 is wound in such a way that it covers both the outer and inner surfaces of the reinforcing element 42, to provide the external and internal surfaces of the tubing, and so that it leaves a resilient, compressible air pocket 46 between the outer and inner surfaces. The compressible air pocket 46 occupies the entire distance between adjacent turns of the reinforcing element. More particularly, as shown in Figure 4, there is shown a section of the tubing comprising five turns of the reinforcing element 42, labelled A to E respectively, and four turns of the strip 45 labelled W to Z respectively (turns Y and Z only being shown in part). The right-hand edge of the first turn W of the strip 45 lies at the left-hand edge of the first turn A of the reinforcing element 42 and extends to the left beneath the next adjacent turn B of the reinforcing element. The adjacent region across the width of the turn W of the strip 45 continues across the space between the turns B and C of the reinforcing element 42, on top of the right-hand edge of the next adjacent turn X of the strip, to which it is bonded. The width then extends up the right-hand side of the turn C of the reinforcing element 42, following its contour closely to the top of the element and then down the left-hand side by about one-third the thickness of the reinforcing element. The turn W then extends horizontally across the space between the two turns C and D of the reinforcing element 42, leaving a gap above the next turn X of the strip, which provides the air pocket 46. The region along the left-hand of the turn W of the strip 45 lies on top of the adjacent turn X where it extends over the turn D of the coil. The left-hand edge of the turn W lies midway between the two turns Y and Z on the outside of the tubing 1. In this way, each turn of the reinforcing element 42 is overlaid by two plies of the strip, whereas the inside of the reinforcing element is covered by a single ply of the strip. In the space between adjacent turns of the reinforcing element 42 there are at least three plies of the strip 45. The outer surface of the tubing 1 is provided by the outer surface of the left-hand part of the strip 45: the inner surface of the tubing is provided by the inner surface of the right-hand part of the strip. The relatively small space between adjacent turns of the reinforcing element 42, which is a result of the small pitch/width ratio of the reinforcing element, and the relatively large thickness of the element prevents the strip, where it extends along the outside of the element, coming into contact with the strip extending along the inside of the element.

The tubing 1 may be made in various different ways. For example, the strip 45 and the reinforcing element 42 may both be extruded and wound, close to where they emerge from the extruder heads about a rotating mandrel, such as one formed by the outside of several rotating, flexible rods extending helically about a common axis. The reinforcing element 42 may be extruded in a circular shape and deformed to the D-shape by contact with the outside of the mandrel. Because the strip 45 and the reinforcing element 42 are not fully cured when they are wound around the mandrel, the overlapping turns of the strip bond with one another and to the reinforcing element.

The tubing of the present invention can be light in weight yet resistant to kinking and crushing. The tubing can also withstand the negative pressures used in milking equipment without collapsing. Although the tubing has a helical reinforcing element, it can still have a substantially smooth inner surface, which improves flow and makes cleaning easier. The smooth internal surface reduces the risk of turbulence in the milk flow and reduces the risk that milk residues will be deposited in the tubing. The tubing can be highly flexible compared with conventional helically-reinforced tubing because of the compressible air pocket between the outer and inner surfaces of the tubing between adjacent turns of the reinforcing element. This is an important advantage in milking applications because it enables the milking cluster to be placed in an ideal position in relation to the udder to ensure an equal loading on the udder. This in turn ensures an equal milking of the teats and reduces the risk that any cup of the cluster will fall off during milking. The compressible pocket need not contain air but could, for example, contain a light, compressible foam, or the like.

## Claims

1. Tubing (1) having an inner surface (41), an outer surface (40) and a helical reinforcing element (42) between the inner and outer surfaces, wherein the tubing includes a strip of material (45) having a width greater than the pitch of the reinforcement element (42), and that the strip (45) is wound on the reinforcement element (42) to extend on the inside of one turn of the reinforcement element (42) and on the outside of an adjacent turn forming a compressible pocket (46) between the inner and outer surfaces (41 and 40) between adjacent turns of the reinforcing element (42) such that when the tubing (1) is bent, the compressible pocket (46) is compressed on the inside of the bend of the tubing.

2. Tubing according to Claim 1, **characterised in that** the compressible pocket is an air pocket (46).

3. Tubing according to Claim 1 or 2, **characterised in that** the reinforcing element (42) has a D-shape section.

4. A tube including tubing according to any one of the preceding claims and at least one end fitting (2, 3) at one end of the tubing, **characterised in that** the end fitting (2, 3) includes a first cylindrical portion (20) extending forwardly of the end of the tubing, a second cylindrical portion (21) encompassing and bonded to the outside of the forward end of the tubing, and a stress-relieving portion (22) extending rearwardly from the second cylindrical portion (21) and bonded to the outside of the tubing (1).

5. A tube according to Claim 4, **characterised in that** the stress-relieving portion (22) comprises a plurality of longitudinal members (24 to 27) extending rearwardly from the rear end of the second cylindrical portion (21).

6. A tube according to Claim 5, **characterised in that** the stress-relieving portion (22) includes a ring member (23) at its rear end encompassing the tubing (1), and that the longitudinal members (24 to 27) extend between the second cylindrical portion (21) and the ring member (23).

7. A tube according to any one of Claims 4 to 6, **characterised in that** the end fitting (2, 3) is moulded about the end of the tubing (1).

8. A method of making tubing comprising the steps of winding a helical reinforcing element (42), winding a strip of flexible material (45) having a width greater than the pitch of the reinforcing element (42) on the reinforcing element (42) so that one part of the strip (45) extends on the outside of the element (42) and another part extends on the inside of the element and joining adjacent turns of the strip (45) to one another such as to leave an air pocket (46) between inner and outer surfaces (41 and 40) of the tubing between adjacent turns of the reinforcing element (42).

## Patentansprüche

1. Schlauch (1), welcher eine innere Oberfläche (41), eine äußere Oberfläche (40) und ein wendelförmiges Verstärkungselement (42) zwischen den inneren und äußeren Oberflächen aufweist, wobei der Schlauch einen Materialstreifen (45) umfaßt, dessen Breite größer ist als die Steigung des Verstärkungselements (42) und daß der Streifen (45) auf das Verstärkungselement (42) aufgewickelt ist, um sich an der Innenseite einer Windung des Verstärkungselements (42) und an der Außenseite einer benachbarten Windung zu erstrecken, um eine zusammendrückbare Tasche (46) zwischen den inneren und äußeren Oberflächen (41 und 40) zwischen benachbarten Windungen des Verstärkungselements (42) zu bilden, derart, daß wenn der Schlauch (1) gebogen wird, die zusammendrückbare Tasche (46) an der Innenseite der Biegung des Schlauchs zusammengedrückt wird.

2. Schlauch nach Anspruch 1, **dadurch gekennzeichnet,** daß die zusammendrückbare Tasche eine Lufftasche (46) ist.

3. Schlauch nach Anspruch 1 oder 2, **dadurch gekennzeichnet**, daß das Verstärkungselement (42) einen D-förmigen Querschnitt aufweist.

4. Schlauch, welches einen Schlauch gemäß einem der vorhergehenden Ansprüche und mindestens ein Endfitting (2, 3) an einem Ende des Schlauchs umfaßt, **dadurch gekennzeichnet,** daß der Endfitting (2, 3) einen ersten zylindrischen Abschnitt (20), der sich von einem Ende des Schlauchs nach vorne erstreckt, ein zweiter zylindrischer Abschnitt (21), der die Außenseite des vorderen Endes des Schlauchs umgreift und mit dieser verbunden ist und einen entspannenden Abschnitt (22) aufweist, der sich vom zweiten zylindrischen Abschnitt (21) nach hinten erstreckt und mit der Außenseite des Schlauchs (1) verbunden ist.

5. Rohr nach Anspruch 4, **dadurch gekennzeichnet**, daß der entspannende Abschnitt (22) aus einer Vielzahl von längsverlaufenden Teilen (24 bis 27) besteht, welche sich nach hinten vom hinteren Ende des zweiten zylindrischen Abschnitts (21) erstrecken.

6. Rohr nach Anspruch 5, **dadurch gekennzeichnet,** daß der entspannende Abschnitt (22) an seinem hinteren Ende ein Ringteil (23) umfaßt, das den Schlauch (1) umgibt und daß die längsverlaufenden Teile (24 bis 27) sich zwischen dem zweiten zylindrischen Abschnitt (21) und dem Ringteil (23) erstrecken.

7. Rohr nach einem der Ansprüche 4 bis 6, **dadurch gekennzeichnet,** daß der Endfitting (2, 3) spritztechnisch etwa auf dem Ende des Schlauchs (1) angebracht ist.

8. Verfahren zur Herstellung eines Schlauchs, bestehend aus den Schritten des Wickelns eines wendelförmigen Verstärkungselements (42), Aufwickeln eines Streifens eines flexiblen Materials (45), das eine größere Breite aufweist als die Steigung des Verstärkungselements (42) auf das Verstärkungselement (42), so daß ein Teil des Streifens (45) an der Außenseite des Elements (42) sich erstreckt und ein anderer Teil an der Innenseite des Elements sich erstreckt und benachbarte Windungen des Streifens (45) miteinander verbindet, um eine Lufttasche (46) zwischen den inneren und äußeren Oberflächen (41 und 40) des Schlauchs zwischen benachbarten Windungen des Verstärkungselements (42) frei zu lassen.

## Revendications

1. Tube (1) comportant une surface intérieure (41), une surface extérieure (40) et un élément de renfort hélicoïdal (42) entre les surfaces intérieure et extérieure, dans lequel le tube comprend une bande de matériau (45) ayant une largeur plus grande que le pas de l'élément de renfort (42), et dans lequel la bande (45) est enroulée sur l'élément de renfort (42) pour s'étendre sur l'intérieur d'un tour de l'élément de renfort (42) et sur l'extérieur d'un tour adjacent en formant une poche compressible (46) entre les surfaces intérieure et extérieure (41 et 40) entre des tours adjacents de l'élément de renfort (42) pour que, lorsque le tube (1) est courbé, la poche compressible (46) soit comprimée à l'intérieur du coude du tube.

2. Tube selon la revendication 1, **caractérisé en ce que** la poche compressible est une poche d'air (46).

3. Tube selon la revendication 1 ou 2, **caractérisé en ce que** l'élément de renfort (42) a une section en forme de D.

4. Tuyau comprenant un tube selon l'une quelconque des revendications précédentes et au moins un raccord d'extrémité (2, 3 ) à une extrémité du tube, **caractérisé en ce que** le raccord d'extrémité (2, 3) comprend une première partie cylindrique (20) s'étendant vers l'avant à l'extrémité du tube, une seconde partie cylindrique (21) entourant et liée à l'extérieur de l'extrémité avant du tube, et une partie de soulagement de l'effort (22) s'étendant vers l'arrière à partir de la seconde partie cylindrique (21) et liée à l'extérieur du tube (1).

5. Tuyau selon la revendication 4, **caractérisé en ce que** la partie de soulagement de l'effort (22) comprend une pluralité d'éléments longitudinaux (24 à 27) s'étendant vers l'arrière à partir de l'extrémité arrière de la seconde partie cylindrique (21).

6. Tuyau selon la revendication 5, **caractérisé en ce que** la partie de soulagement de l'effort (22) comporte, à son extrémité arrière, un élément annulaire (23) entourant le tube (1), et en ce que les éléments longitudinaux (24 à 27) s'étendent entre la seconde partie cylindrique (21) et l'élément annulaire (23).

7. Tuyau selon l'une quelconque des revendications 4 à 6, **caractérisé en ce que** le raccord d'extrémité (2, 3) est moulé sur l'extrémité du tube (1).

8. Procédé de fabrication d'un tube comprenant les étapes d'enroulement d'un élément de renfort hélicoïdal (42), d'enroulement d'une bande de matériau flexible (45) ayant une largeur plus grande que le pas de l'élément de renfort (42) sur l'élément de renfort (42) pour qu'une partie de la bande (45) s'étende sur l'extérieur de l'élément (42) et qu'une autre partie s'étende sur l'intérieur de l'élément en joignant les tours adjacents de la bande (45) l'un à l'autre afin de laisser une poche d'air (46) entre les surfaces intérieure et extérieure (41 et 40) du tube entre des tours adjacents de l'élément de renfort (42).
